# DEMANDE DE BREVET EUROPEEN

(11) **EP 1 561 642 A1**
(43) Date de publication de la demande: **10.08.2005**
(21) Numéro de dépôt: 04075338.6
(22) Date de dépôt: 03.02.2004
(51) Int. Cl.: B60R 1/076

(54) **Ensemble pour la liaison articulée d'un miroir retroviseur**

(71) Demandeur: Fico Mirrors, SA, 08028 Barcelona (ES)
(72) Inventeur: Valade, Christophe, 54610 Serrieres (FR); Fanelli, Philippe, 89140 Gisy Les Nobles (FR)
(74) Mandataire: Gislon, Gabriele

(57) **Abrégé**

L'invention concerne un ensemble pour la liaison articulée d'un miroir rétroviseur, du genre comprenant un tourillon (1) inséré coaxialement à travers un élément troué relié à un châssis dudit miroir, ledit tourillon ayant, à sa première extrémité (1a), une bride (4) et, à sa deuxième extrémité (1b), au moins une configuration de rétention (3) adaptée pour sa fixation à une configuration de rétention correspondante d'une base reliée à un véhicule, un membre élastique étant agencé entre cette bride (4) et un support dudit élément troué ;
caractérisé en que ledit membre élastique comprend un cylindre creux (5), en matière plastique moulée, agencé comme une jupe depuis le bord périphérique de la bride (4) vers la deuxième extrémité (1b) du tourillon (1) coaxialement à celui-ci et en ce que ledit cylindre creux (5) est pourvu d'au moins une ouverture (6) conformée de façon adéquate pour conférer au cylindre creux (5) ladite propriété élastique.

## Description

La présente invention concerne un ensemble pour effectuer la liaison articulée d'un miroir rétroviseur à l'extérieur d'un véhicule et plus précisément un membre élastique agissant sur cet ensemble.
L'invention est utilisée dans le domaine de l'industrie de l'automobile.

Les véhicules automobiles ont habituellement au moins un miroir rétroviseur placé à l'extérieur sur un côté du véhicule pour permettre au conducteur de voir, vers l'arrière, une bande de la route adjacente à la bande par laquelle le véhicule est en train de rouler. Ce genre de miroir comprend un organe réflecteur, ou miroir proprement dit, monté sur une carcasse ou châssis qui est relié à son tour à une base fixée sur le côté du véhicule. En fonctionnement, le châssis du miroir adopte une position fixe par rapport à la base et des moyens manuels ou motorisés permettent à l'usager de choisir l'orientation de l'organe réflecteur par rapport au châssis du miroir pour régler l'angle de vue de celui-ci. Le châssis du miroir, en fonctionnement, se place sur le côté du véhicule dans une direction transversale à celui-ci et cette situation a l'inconvénient, notamment lorsque l'on effectue des manoeuvres dans des passages étroits ou lorsque le véhicule est stationné, que le châssis du miroir peut facilement heurter un objet, une personne ou un véhicule ou être heurté par ceux-ci, ce qui peut entraîner le bris du miroir rétroviseur et/ou des dégâts à d'autres véhicules et/ou des blessures à un piéton.
Pour résoudre cet inconvénient, on connaît la liaison articulée du châssis du miroir rétroviseur à la base fixée à l'extérieur du véhicule, en offrant au moins deux positions stables pour le châssis: une position en situation de fonctionnement, dans laquelle le châssis est placé en direction transversale sur le côté du véhicule; et une position de stationnement, dans laquelle le châssis est replié en arrière contre le côté du véhicule, de sorte que le châssis dépasse à peine ou même pas du tout et l'organe réflecteur reste en face sur le côté du véhicule et protégé. Le passage d'une position à l'autre s'effectue à la main en surmontant la force d'un membre élastique. D'habitude, le châssis peut également faire un tour de sécurité en se rabattant dans la direction opposée en surmontant cette force élastique, ce qui a pour effet de céder en tournant lors de tout contact avant de se casser ou de causer des dégâts à des personnes ou des objets. La rotation vers cette position de stationnement a également cette fonction de sécurité lorsque le contact se fait en sens inverse.
Le brevet EP-A-0807551 décrit un miroir rétroviseur extérieur d'automobile équipé d'un ensemble de liaison articulée comprenant un tourillon coaxialement inséré à travers un élément troué, tel qu'un cercle, relié à un châssis de ce miroir rétroviseur, ce tourillon ayant à une première extrémité une bride et à une deuxième extrémité au moins une configuration de rétention apte pour la fixation à une configuration de rétention correspondante d'une base reliée au véhicule. Entre cette bride et un support de ce cercle se trouve un membre élastique qui agit à compression dans un sens parallèle à l'axe de ce tourillon pour assurer un contact sous pression entre une partie inférieure du cercle et une assise de cette base, avec la possibilité de tourner dans un angle limité par des butées respectives. A cette partie inférieure du cercle et à cette assise de cette base se trouvent situées des rainures et languettes complémentaires, à bords inclinés, susceptibles d'être emboîtées pour fournir les positions stables décrites plus bas. Lorsque l'on fait tourner à la force, avec la main, le châssis, ces bords inclinés glissent en déplaçant axialement le cercle contre la force du ressort élastique jusqu'à ce que les languettes de l'un montent et glissent sur les languettes de l'autre en permettant qu'il tourne en se repliant.
Le membre élastique utilisé dans ledit brevet est un ressort hélicoïdal à compression conventionnel qui est fait en un acier pour ressorts comportant généralement un traitement superficiel antirouille. Ce ressort est relativement cher à produire et, à cause de sa configuration hélicoïdale, d'un maniement gênant, ce qui rend difficile les opérations de montage de l'ensemble.

Un objet de la présente invention est d'offrir un ensemble pour la liaison articulée du miroir rétroviseur pourvu d'un membre élastique susceptible d'être produit à faible coût.
Un autre objet de cette invention est de fournir un ensemble pour la liaison articulée d'un miroir rétroviseur muni d'un membre élastique susceptible d'être manié de façon simple et efficace pour faciliter le montage de l'ensemble.
Ces objectifs sont atteints, conformément à cette invention, en fournissant un ensemble pour la liaison articulée d'un miroir rétroviseur extérieur sur le côté d'un véhicule du type décrit dans le brevet sus-mentionné.
L'ensemble selon l'invention se caractérisé en ce que le membre élastique comprend un cylindre creux en matière plastique moulée pourvu d'au moins une ouverture conformée de façon adéquate pour conférer au cylindre creux ladite propriété élastique à compression substantiellement dans une direction parallèle à l'axe du tourillon. Ce cylindre creux élastique est disposé coaxialement au tourillon comme une jupe, depuis un bord périphérique de la bride existant à une première extrémité du tourillon vers la deuxième extrémité de celle-ci où il retrouve ledit support du cercle. Tel comme il est utilisé dans cette description, le terme "cercle" prétend comprendre toute bande de matériau agencée autour d'un trou et pourra se présenter, par exemple, sous la forme d'une platine reliée au châssis et dans laquelle un trou aura été percé ou une bride intérieure agencée à l'extrémité inférieure d'un manchon relié au châssis.
Cette ouverture du corps cylindrique peut être unique, à configuration hélicoïdale, de sorte qu'elle définisse dans le cylindre creux une bague supérieure et une bague inférieure reliées entre elles par au moins une bande hélicoïdale, bien que de préférence le cylindre creux comprendra deux ouvertures hélicoïdales ou plus y définissant une bague supérieure et une bague inférieure reliées entre elles par autant de bandes hélicoïdales. D'une façon encore plus préférable, les bandes hélicoïdales laissées dans le cylindre creux ont des sens d'hélices opposés et se croisent en s'intégrant mutuellement dans des zones de croisement. On l'obtient en définissant une pluralité d'ouvertures à forme substantiellement rhombique distribuées en quinconce sur toute la paroi du cylindre creux. Cette configuration en bandes hélicoïdales à sens d'hélices opposés et des zones de croisement intégrales fournissent plus de force et sont plus uniformément distribuées.
Conformément à un premier exemple de réalisation, ce cylindre creux sous forme de jupe élastique est indépendant du tourillon, donc ce dernier peut être en tout matériau approprié.
Conformément à un deuxième exemple de réalisation, le tourillon est creux, de la même matière plastique moulée que le cylindre creux et ce cylindre creux sous forme de jupe élastique est solidaire du tourillon, cette bague supérieure de la jupe étant de préférence intégrée à ce bord périphérique de la bride.
La matière plastique à partir de laquelle est fait le cylindre creux élastique, et éventuellement le tourillon, est une matière plastique d'une haute technicité ayant les caractéristiques d'élasticité et de résistance requises et étant susceptible d'être moulée par injection. Dans le deuxième exemple de réalisation, dans lequel le cylindre creux élastique est solidaire du tourillon, on choisira une composition pour cette matière plastique qui possède un coefficient faible de friction avec le matériau du cercle car il existera un mouvement relatif de glissement entre une extrémité du cylindre creux élastique et le support du cercle.
Le fait que le membre élastique de l'ensemble de l'invention soit obtenu par moulage d'injection de matière plastique permet qu'il soit produit à faible coût. Cette configuration élastique du cylindre creux basée sur des ouvertures rhombiques rangées régulièrement permet qu'il soit manipulé plus facilement car elles n'ont pas la tendance à entrelacer leurs spires avec celles d'autres éléments élastiques stockés ensemble qu'ont les ressorts hélicoïdaux conventionnels. De plus, le fait que le membre élastique soit solidaire du tourillon réduit le nombre de composants à fabriquer, réviser, stocker et assembler, ce qui, à son tour, réduit le coût final de l'ensemble.

Ces avantages et caractéristiques seront plus évidents à la lecture de la description suivante détaillée d'exemples de réalisation préférés par rapport aux dessins annexés, dans lesquels:
- la Fig.1 est une vue partielle, en élévation, en coupe longitudinale, d'un ensemble pour la liaison articulée d'un miroir rétroviseur conformément à l'état de l'art ;
- la Fig.2 est une vue en perspective d'un membre élastique et un tourillon conformément à un premier exemple de réalisation de l'ensemble pour la liaison articulée d'un miroir rétroviseur selon l'invention ;
- la Fig.3 est une vue en perspective d'un ensemble membre élastique et tourillon intégrés dans une seule pièce conformément à un deuxième exemple de réalisation de l'ensemble selon l'invention ;
- la Fig.4 est une vue en plan du dessous de l'ensemble membre élastique et tourillon selon la Fig.3.

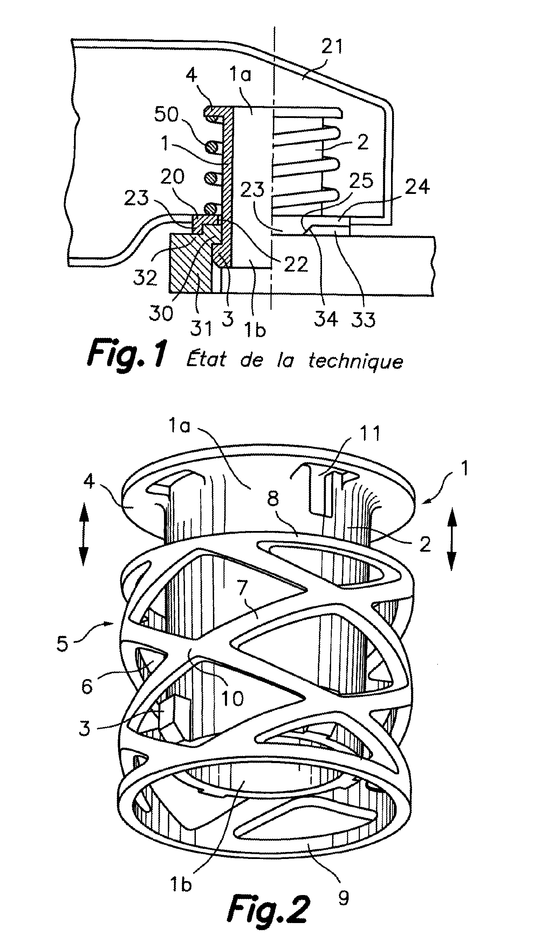

Dans les figures on a utilisé les mêmes références numériques pour désigner des éléments analogues.
En se rapportant tout d'abord à la Fig.1, elle montre un ensemble pour la liaison articulée d'un miroir rétroviseur de l'état de l'art qui comprend un tourillon (1) qui a une bride (4) à une première extrémité (1a) et à une deuxième extrémité (1b), au moins une configuration de rétention (3) apte pour la fixation, par exemple du genre à baïonnette ou semblable, à une configuration de rétention (30) correspondante prévue sur une base (31) reliée à un véhicule (non représenté). Ce tourillon (1) est de préférence creux et possède une surface extérieure de révolution (2), par exemple, cylindrique ou légèrement conique, insérée coaxialement à travers un élément troué, tel qu'un cercle (20), qui est relié à ou est solidaire d'un châssis (21) de ce miroir rétroviseur. Ce cercle (20) comprend un support (22) et une partie inférieure (23) qui est appuyée sur une assise (32) de cette base (31). Entre cette bride (4) et ce support (22) du cercle (20) un ressort hélicoïdal (50) en acier est agencé qui agit à compression dans une direction parallèle à l'axe du tourillon (1) pour assurer un contact à pression entre cette partie inférieure (23) du cercle (20) et cette assise (32) de la base (31), ce contact sous pression permettant une rotation du cercle (20) et, par conséquent, du châssis (21), para rapport à la base (31) à l'intérieur d'un angle limité par des butées respectives (non représentés). Dans certaines applications, ce cercle (20) est situé à l'extrémité inférieure d'un manchon à l'intérieur duquel est logé l'ensemble du tourillon (1) et ressort (50), bien que ce manchon ne soit pas indispensable.

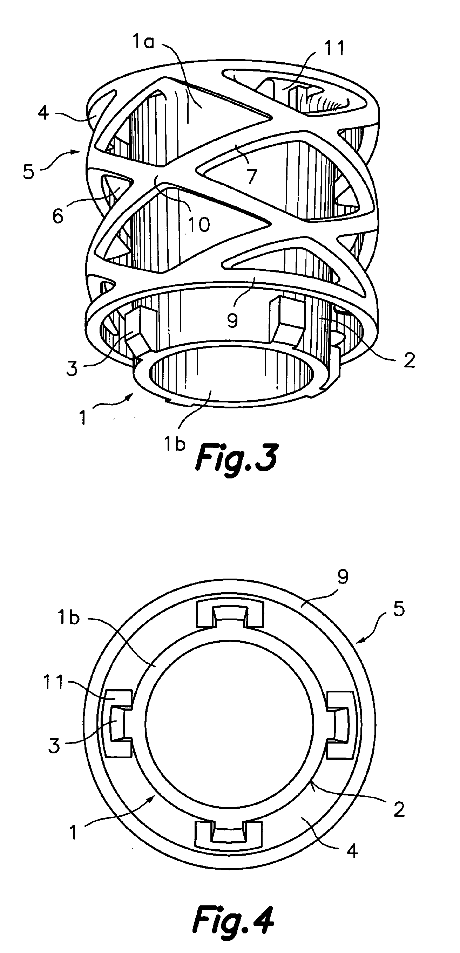

A cette partie inférieure (23) du cercle (20) et dans cette assise (32) de la base (31), sont agencés des rainures (24) et languettes (33) complémentaires respectives susceptibles de s'emboîter pour fournir les positions stables décrites plus haut. Ces rainures (24) et languettes (33) ont des bords latéraux inclinés (25) et (34) respectifs qui, lorsque la rotation du châssis (21) par rapport à la base (31) est forcée à la main, glissent les uns sur les autres en déplaçant le cercle (20) axialement contre la force du ressort (50) jusqu'à ce que la partie inférieure (23) du cercle (20) monte et glisse sur les languettes (33) de la base (31) en permettant les rotations de repliement décrites par rapport à l'état de l'art.
Le dispositif de cette invention est du genre décrit plus haut et il est caractérisé en ce que ce ressort hélicoïdal (50) en acier est remplacé par un membre élastique (5) dont les caractéristiques sont décrites plus bas. Les Fig.2 et 3 montrent, respectivement, un premier et un deuxième exemples de réalisation de l'e,semble membre élastique (5) et tourillon (1) du dispositif de cette invention.
En se rapportant maintenant à la Fig.2, ce membre élastique comprend, conformément au premier exemple de réalisation, un cylindre creux (5) en matière plastique moulée qui, en fonctionnement, est agencé comme une jupe coaxiale autour du tronc du tourillon (1), depuis un bord périphérique de la bride (4) existant à cette première extrémité (1a) de celle-ci et vers la deuxième extrémité (1b) du tourillon (1) où elle se trouve avec le support (22) du cercle (20). Ce cylindre creux (5) comprend une pluralité d'ouvertures (6) qui y laissent une bague supérieure (8) et une bague inférieure (9) reliées entre elles par au moins deux bandes hélicoïdales (7) qui ont des sens de l'hélice opposés et qui se croisent en s'intégrant mutuellement dans des zones de croisement (10). Pour ce, ces ouvertures (6) ont une forme substantiellement rhombique et sont distribuées en quinconce sur toute la paroi du cylindre creux (5).
Dans l'exemple illustré, il existe deux bandes hélicoïdales (7) ayant un sens d'hélice et deux autres bandes hélicoïdales (7) ayant le sens d'hélice opposé.
Cette configuration d'ouvertures (6) rhombiques, bandes (7) hélicoïdales à sens d'hélice opposés et zones de croisement (10) intégrales fournissent une force élastique suffisante avec une épaisseur de la paroi du cylindre creux modérée, la force est uniformément distribuée et les spires n'ont plus tendance à s'entrelacer et à s'embrouiller avec celles des éléments élastiques adjacents durant leur stockage et manipulation. Cependant, d'autres configurations sont possibles (non représentées). Par exemple, une seule ouverture, à développement hélicoïdal, qui laisse dans le cylindre creux une bague supérieure et une bague inférieure reliées entre elles par une seule bande hélicoïdale; ou deux ou plus ouvertures à développement hélicoïdal qui laissent dans le cylindre creux autant d'autres bandes hélicoïdales parallèles reliant la bague supérieure à la bague inférieure. Quoique les bagues supérieure et inférieure sont utiles, dans certains cas elles ne sont pas indispensables, par exemple dans le cas où il existerait plusieurs bandes hélicoïdales croisées intégralement. Même s'il existait plusieurs bandes hélicoïdales parallèles, elles pourraient être reliées entre elles par quelques liaisons intermédiaires sporadiques en supprimant une ou les deux bagues.
Le fait d'offrir l'élément élastique en matière plastique moulée par injection a l'avantage de réduire son coût de production et de permettre de dessiner une configuration rendant sa manipulation plus facile.
Les Fig.3 et 4 montrent le deuxième exemple de réalisation de l'invention dans lequel ce tourillon (1) est en matière plastique moulée et ce cylindre creux (5) semblable à une jupe est solidaire du tourillon (1). Dans la variante illustrée dans la Fig.3 la configuration des ouvertures (6) est la même décrite par rapport au premier exemple de réalisation montré dans la Fig.2, c'est à dire cette pluralité d'ouvertures (6) ont une forme rhombique et laissent une bague supérieure (8) et une bague inférieure (9) reliées entre elles par au moins deux bandes hélicoïdales (7) qui ont des sens d'hélice opposés et qui se croisent en s'intégrant mutuellement dans des zones de croisement (10), seulement, dans ce deuxième exemple de réalisation, la bague supérieure (8) du cylindre creux (5) est intégrée à ce bord périphérique de la bride (4) ou, dit autrement, des extrémités des bandes hélicoïdales (7) sont reliées intégralement au bord périphérique de la bride (4). Il est évident, par ailleurs, qu'ici la configuration des ouvertures du cylindre creux admet les mêmes variantes évoquées plus haut par rapport au premier exemple de réalisation.
Le fait de fournir l'élément élastique et le tourillon intégrés en une seule pièce en matière plastique moulée par injection a l'avantage complémentaire de réduire le nombre de pièces en rendant la fabrication, vérification, stockage et montage de l'ensemble plus faciles, ce qui réduit leur coût final.
Le tourillon (1), aussi bien dans le premier exemple de réalisation montré dans la Fig.2 que dans le deuxième exemple de réalisation montré dans la Fig.3 est de préférence creux, en définissant une paroi cylindrique avec une surface extérieure de révolution (2), cylindrique ou légèrement conique et comprend quatre de ces configurations de rétention (3) distribuées à des intervalles réguliers autour de sa deuxième extrémité (1 b) (mieux représentée dans la Fig.4), bien que une seule configuration de rétention (3) pourrait suffire. La bride (4) comprend deux paires d'ouvertures (11) diamétralement opposées et se faisant face avec les configurations de rétention (3), ces ouvertures (11) se prolongeant le long d'une portion de cette paroi cylindrique du tourillon (1). Ces ouvertures (11) sont aptes pour recevoir un outil de montage servant à presser le tourillon contre la force du membre élastique (5) jusqu'à faire passer la deuxième extrémité (1 b) à travers un trou correspondant de la base (31), la faire tourner et la lâcher pour accoupler ces configurations de rétention (3) aux configurations de rétention (30) de la base (31), comme une fermeture à baïonnette ou semblable. Il faut remarquer que le nombre et la forme des ouvertures (11) est en fonction des caractéristiques de l'outil, alors, dans certains cas une seule ouverture (11) pourrait suffire.
Tandis que le tourillon (1) du premier exemple de réalisation montré dans la Fig.2, lorsqu'il est séparé est en fait un tourillon du genre conventionnel et il peut être obtenu en tout matériau et par tout procédé convenable, le tourillon (1) du deuxième exemple de réalisation montré dans la Fig.3 est de la même matière plastique que l'élément élastique et son dessin se fait en même temps que celui du membre élastique (5) pour être obtenus intégralement en une seule pièce dans un procédé de moulage par injection. Dans ce cas, cette matière plastique utilisée est une matière plastique à haute technicité qui fournit les caractéristiques d'élasticité et de résistance requises pour l'élément élastique (5).
Dans les deux exemples de réalisation de cette invention, le groupe formé par l'élément élastique (5) et le tourillon (1) est intégré dans l'ensemble pour la liaison articulée d'un miroir rétroviseur d'une façon bien connue dans la technique du secteur et montrée dans la Fig.1 de l'état de l'art. En fait, un ensemble élément élastique (5) et tourillon (1) selon l'invention pourrait remplacer un même ensemble de type conventionnel, s'il était dessiné de façon appropriée pour cela.
Les exemples de réalisation sus-décrits et représentés aux figures doivent être interprétés comme illustrant et ne limitant pas le domaine de l'invention, qui est défini dans les revendications annexées.

## Revendications

1. Ensemble pour la liaison articulée d'un miroir rétroviseur, du genre comprenant un tourillon (1) inséré coaxialement à travers un élément troué (20), tel qu'un cercle, relié à un châssis (21) dudit miroir, ledit tourillon (1) ayant, à une première extrémité (1a), une bride (4) et, à une deuxième extrémité (1b), au moins une configuration de rétention (3) adaptée pour sa fixation à une configuration de rétention (30) correspondante d'une base (31) reliée à un véhicule, un membre élastique étant agencé entre cette bride (4) et un support (22) de cet élément troué (20), agissant en compression dans une direction parallèle à l'axe de ce tourillon (1) pour assurer un contact sous pression entre une partie inférieure (23) de l'élément troué (20) et une assise (32) de cette base (31), avec la possibilité de tourner dans un angle limité par des butées respectives ;
**caractérisé en que** ledit membre élastique comprend un cylindre creux (5), en matière plastique moulée, agencé comme une jupe depuis le bord périphérique de la bride (4) vers cette deuxième extrémité (1b) du tourillon (1) coaxialement à celui-ci, en ce que ledit cylindre creux (5) est pourvu d'au moins une ouverture (6) conformée de façon adéquate pour conférer au cylindre creux (5) ladite propriété élastique et en ce que l'ouverture (6), qui est au moins au nombre d'une, définit, dans le cylindre creux (5), au moins une bande hélicoïdale (7).

2. Ensemble, selon la revendication 1, **caractérisé en ce que** le cylindre creux (5) comprend une pluralité d'ouvertures (6) qui définissent au moins deux bandes hélicoïdales (7).

3. Ensemble, selon la revendication 2, **caractérisé en ce que** les bandes hélicoïdales (7), qui sont au moins au nombre de deux, ont des sens d'hélices opposés et se croisent en s'intégrant mutuellement dans des zones de croisement (10).

4. Ensemble, selon la revendication 1, 2 ou 3, **caractérisé en ce que** chaque bande hélicoïdale (7) est reliée intégralement par ses extrémités, d'une part, à une bague supérieure (8) et, d'autre part, à une bague inférieure (9).

5. Ensemble, selon la revendication 1, **caractérisé en ce que** le tourillon (1) est creux définissant une paroi cylindrique avec une surface extérieure de révolution (2).

6. Ensemble, selon la revendication 1, **caractérisé en ce que** la bride (4) comprend au moins deux ouvertures (11) aptes pour recevoir un outil de montage.

7. Ensemble, selon la revendication 1, **caractérisé en ce qu'**il comprend plusieurs configurations de rétention (3) distribuées à des intervalles réguliers autour de cette deuxième extrémité (1b) du tourillon (1) et **en ce que** la bride (4) comprend d'autres ouvertures (11), diamétralement opposées deux à deux, adaptées pour recevoir un outil de montage.

8. Ensemble, selon la revendication 6 ou 7, **caractérisé en ce que** chaque ouverture (11) se prolonge le long d'une portion de la paroi cylindrique du tourillon (1).

9. Ensemble, selon l'une quelconque des revendications précédentes,
**caractérisé en ce que** le tourillon (1) est en une matière plastique moulée et **en ce que** ce cylindre creux (5) semblable à une jupe est solidaire dudit tourillon (1).

10. Ensemble, selon la revendication 9, **caractérisé en ce que** chaque bande hélicoïdale (7) est reliée intégralement, par l'une de ses extrémités, au bord périphérique de la bride (4) et, par l'autre de ses extrémités, à une bague inférieure (9).
